# EUROPEAN PATENT APPLICATION

(11) **EP 2 749 899 A2**
(43) Date of publication of application: **02.07.2014**
(21) Application number: 13198924.6
(22) Date of filing: 20.12.2013
(51) Int. Cl.: G01S 17/93

(54) **Method for differentiating between a target object and an atmospheric component in a measurement with the aid of an optoelectronic sensor device of a motor vehicle, sensor device and motor vehicle**

(30) Priority: 28.12.2012 DE 102012025466
(71) Applicant: Valeo Schalter und Sensoren GmbH, 74321 Bietigheim-Bissingen (DE)
(72) Inventor: Hue, David, 95430 Butry sur Oise (FR)

(57) **Abstract**

The invention relates to a method for operating an optoelectronic sensor device (3) of a motor vehicle by emitting an optical sensor signal (1) into an environmental region (9) of the motor vehicle by means of a transmitter (4) of the sensor device (3); by receiving a sensor signal (2) reflected in the environmental region (9) and providing an electrical received signal (11) depending on the received sensor signal (2) by means of a receiver (5) of the sensor device (3); and by determining if the reflected sensor signal (2) originates from a target object or from atmospheric components by means of an evaluation device (6) of the sensor device (3) based on the electrical received signal (11), wherein based on the electrical received signal (11), a propagation time (R) of the sensor signal (1, 2) is determined and the reflected sensor signal (2) is interpreted as originating from a target object if the propagation time (R) is greater than a preset limit value (GR).

## Description

The invention relates to a method for operating an optoelectronic sensor device of a motor vehicle. An optical sensor signal is emitted into an environmental region of the motor vehicle by means of a transmitter of a sensor device. A receiver of the sensor device then receives a sensor signal reflected in the environmental region and provides an electrical received signal depending on the received sensor signal. An evaluation device determines if the reflected sensor signal originates from an actual target object or else from atmospheric components, based on the electrical received signal. In addition, the invention relates to an optoelectronic sensor device for performing such a method as well as to a motor vehicle with such a sensor device.

Optoelectronic sensor devices (Lidar, "Light Detecting and Ranging"), in particular laser-based systems, are already prior art and allow identification of objects in a relatively large range up to over 100 m from the motor vehicle with a relatively high measurement accuracy. Such sensor devices are usually placed in the front region of the motor vehicle, for example behind the windshield or else on the radiator grille, in order to determine the time to collision (TTC) among other things. However, such systems can also be placed in lateral regions of the vehicle in order to in particular monitor the blind angle. Further arrangements are also possible, for example integration in a taillight.

An optoelectronic sensor device operates according to the principle of light propagation time and typically includes an optical transmitter emitting short laser pulses, which are for example deflected via a pivoting mirror such that sampling of the entire field of view in horizontal direction within a predetermined sampling angle range occurs. However, sensor devices are also known, which do without such a pivoting mirror and thus without mechanics and instead use corresponding optics placed in front of the transmitter and/or in front of the receiver. Here, the horizontal opening angle of the sensor device is defined by this optics.

Optoelectronic sensor devices are for example known from the documents DE 10 2007 004 973 A1 and US 7 821 618 B2.

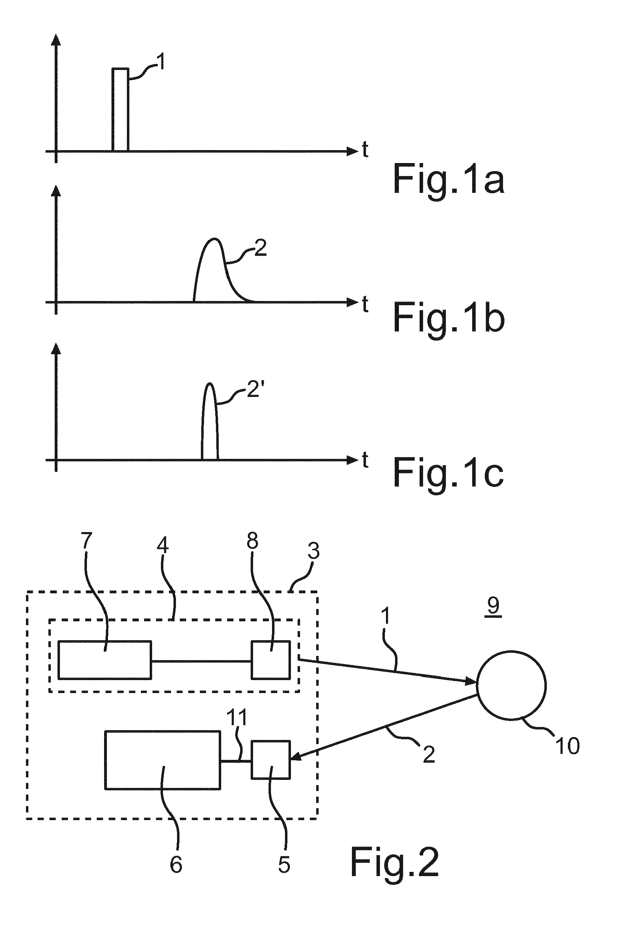

Optoelectronic sensor devices can differentiate between actual target objects on the one hand and atmospheric components on the other hand. Presently, all of the actual and material items as well as living creatures are understood by "target objects", which present a potential obstacle to the motor vehicle. Thus, target objects are all objects, with which collision of the motor vehicle is possible at all. In contrast, by the term "atmospheric component", an atmospheric disturbance is understood, namely water drops in the form of rain, fog, hail, snow and the like. Known sensor devices can differentiate between these two types of objects by evaluating the geometric shape of the reflected sensor signal. Namely, atmospheric components generate wide light pulses, because the emitted sensor signal is reflected at several locations in the environmental region. In contrast, real target objects basically reflect the light at one location such that the reflected sensor signal has a considerably narrower pulse. These differences in the pulse width are illustrated in Fig. 1a to 1 c. Fig. 1 a shows the progression of a sensor signal 1 over the time t, which is emitted from the sensor device into the environmental region - transmit signal. Here, the sensor signal 1 is a light pulse. In Fig. 1 b, a reflected sensor signal 2 is illustrated, which originates from atmospheric components like fog, rain and the like. As is apparent from Fig. 1 b, the reflected light pulse is relatively wide. In contrast, Fig. 1c shows a reflected sensor signal 2' originating from an actual target object. Here, the light pulse is considerably narrower than the pulse 2 according to Fig. 1 b.

However, such a differentiation between wider and narrower light pulses is only possible with technically sophisticated and thus relatively complicated and expensive sensor devices. However, simpler sensor devices not having this functionality also belong to the prior art. These more inexpensive sensors are not capable of differentiating between a wide light pulse and a narrower light pulse such that differentiation between target objects and atmospheric components by evaluation of the width of the received light pulse either is not possible.

It is an object of the invention to demonstrate a solution, how in a method of the initially mentioned kind, it can be differentiated between target objects on the one hand and atmospheric disturbances on the other hand in simple manner.

According to the invention, this object is solved by a method, by a sensor device as well as by a motor vehicle having the features according to the respective independent claims. Advantageous implementations of the invention are the subject matter of the dependent claims, of the description and of the figures.

A method according to the invention serves for operating an optoelectronic sensor device of a motor vehicle. An optical sensor signal is emitted into an environmental region of the motor vehicle by means of an optical transmitter of the sensor device, and the sensor signal reflected in the environmental region (at least a signal component of the sent sensor signal) is received by means of an optical receiver. Depending on the received sensor signal, the receiver provides an electrical received signal, which is evaluated by means of an electronic evaluation device. Based on the electrical received signal, it is determined if the reflected sensor signal was reflected from a target object or else from an atmospheric component. Based on the electrical received signal, a propagation time of the sensor signal is determined, and the reflected sensor signal is interpreted as originating from an actual target object whenever the propagation time is greater than a preset limit value.

In the evaluation device, thus, it is differentiated between a distance near range and a distance far range. If the reflected sensor signal originates from the preset distance far range and if the propagation time of the sensor signal is therefore above the preset limit value, thus, this presents a unique indication that the signal was reflected on an actual target object and thus on a real item. Therein, the invention exploits the fact that in case of atmospheric components the emitted sensor signal is typically reflected in the near range such that the measured distance is relatively low. If the measured distance is above a limit value, thus, it is little likely that the sensor signal was reflected on atmospheric components. Thus, if a distance is measured, which is above a preset limit value, it can be assumed with large certainty that it is a real target object and thus an obstacle and not an atmospheric component. However, if the measured distance is below the limit value, preferably, further plausibility check is performed.

The method according to the invention also includes the approach that a distance is calculated from the propagation time of the sensor signal and compared to a corresponding limit value. It is equivalent if the measured propagation time is compared to the preset limit value or else a distance determined from it is compared to a corresponding limit value. The two variables "propagation time" and "distance" are therefore equivalent.

The method according to the invention in particular has the advantage that it can be reliably decided without much effort and thus also with an inexpensive sensor device if the reflected and received sensor signal originates from an actual target object or from atmospheric components. It is not required to determine the width of a reflected light pulse such that the effort is overall reduced.

The mentioned limit value preferably corresponds to a distance value from the motor vehicle, which is in a range of values from 2 m to 6 m, in particular from 3 m to 5 m. In an embodiment, the limit value corresponds to a distance value of 4 m from the motor vehicle. Therefore, if a distance greater than 4 m is measured, thus, it is assumed that it is a real target object, which optionally presents a potential risk to the motor vehicle in the environmental region. In contrast, if the measured distance is below 4 m, thus, a further plausibility check is performed in order to uniquely determine if the reflecting location is a target object or else atmospheric components.

If the propagation time is below the preset limit value, thus, preferably, a further plausibility check is performed. Herein, different embodiments can be provided, which can be individually implemented by themselves or else be arbitrarily combined with each other to allow a further plausibility check:
If the propagation time is less than the preset limit value, in an embodiment, sensor data of at least one further sensor is used for plausibility check. Depending on this sensor data, it is then determined if the reflected sensor signal originates from a target object or from atmospheric components. Thus, it can be reliably determined with high accuracy if the reflections in the near range originate from an item or else from fog and/or rain. If there is an actual target object in the near range, thus, it is also detected by further sensors. For example, a distance sensor, in particular at least one ultrasonic sensor and/or at least one radar sensor and/or a camera, can be used as the sensor. If a distance sensor is used, thus, the sensor data includes distance values measured by means of the distance sensor. If a camera is used, thus, the sensor data presents images, in which an object can be optionally detected.

The reflected sensor signal is interpreted as originating from an actual target object if the target object is detected in the near range by means of the at least one separate sensor. Therein, it is in particular provided that the sensor signal is interpreted as originating from an actual item if a distance greater than zero and in particular less than a distance value corresponding to the limit value is measured by means of the at least one sensor and/or the target object is identified based on images of a camera.

According to a further embodiment, for plausibility check, the current velocity of the motor vehicle can also be used. If the measured propagation time is below the preset limit value, thus, it is preferably determined if the reflected sensor signal originates from a target object of from atmospheric components depending on the current velocity of the motor vehicle. This embodiment is based on the realization that with a relatively high velocity of the motor vehicle it is rather unlikely that other target objects enter the near range beside the motor vehicle. Preferably, thus, the reflected sensor signal is interpreted as originating from atmospheric components if the current velocity is greater than a preset velocity limit value. This functionality of determining the condition of the reflecting object depending on the current velocity can also be activated and deactivated with the aid of a hysteresis. Therein, two different velocity limit values can be defined, and this functionality can only be activated if the current velocity exceeds the higher second velocity limit value. However, this functionality is only deactivated if the current velocity falls below the lower first velocity limit value. Thus, it is ensured that the velocity of the motor vehicle is only taken into account in determining the condition of the reflecting object if the motor vehicle moves with a relatively high velocity. Namely, only then, it can be assumed with high accuracy that a sensor signal reflected in the near range was reflected from atmospheric components and not from a real target object.

A further embodiment includes that the measured propagation time of the sensor signal over the time is monitored such that the plausibility check is performed depending on the stability of the measured propagation time and thus depending on the stability of the measured distance. By means of the sensor device, a plurality of optical sensor signals can be emitted one after the other into the environmental region and the respective propagation time can be determined to a plurality of received reflected sensor signals. If the propagation times are less than the preset limit value, the reflected sensor signals can be interpreted as originating from an actual target object if a deviation or spread of the propagation times among each other is less than a preset deviation limit value and therefore the measured distance exhibits a certain stability over the time. Namely, it has turned out that with atmospheric components, the measured distance is not as stable as with real target objects because the emitted sensor signals are reflected on atmospheric components at different locations in the environmental region and thus overall have different propagation times. The deviation of the propagation times from each other is therefore considerably greater with atmospheric components than with an actual item. This embodiment too provides for reliable and simple differentiation between real target objects one the one hand as well as atmospheric components on the other hand.

The above described three methods for plausibility check of the decision can also be arbitrarily combined with each other. However, they can also be individually applied such that exclusively the first embodiment or exclusively the second embodiment or exclusively the third embodiment is used.

The invention also relates to an optoelectronic sensor device, which is formed for performing a method according to the invention.

A motor vehicle according to the invention, in particular a passenger car, includes a sensor device according to the invention. The preferred embodiments presented with respect to the method according to the invention and the advantages thereof correspondingly apply to the sensor device according to the invention and to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1a to 1c: exemplary temporal signal progressions;
- Fig. 2: in schematic illustration a block diagram of a sensor device according to an embodiment of the invention;
- Fig. 3: a flow diagram of a method according to an embodiment of the invention; and
- Fig. 4: an exemplary hysteresis.

An optoelectronic sensor device 3 illustrated in Fig. 2 is formed for employment and thus for installation in a passenger car. The sensor device 3 includes an optical transmitter 4 as well as an optical receiver 5 and an electronic evaluation device 6. The transmitter 4 includes a signal generator 7 as well as a radiation source 8, in particular a laser diode, which emits light beams as a sensor signal 1 into an environmental region 9. The sensor signal 1 is preferably a light pulse, wherein such light pulses are emitted into the environmental region 9 one after the other. The generator 7 drives the source 8. The frequency of the sensor signal 1 can be in the spectral range visible or invisible to the human.

For example, the receiver 5 can include at least one photodiode, for example an avalanche photodiode. The receiver 5 receives a reflected sensor signal 2, which has been reflected on a reflecting object 10 in the environmental region 9. Depending on the received reflected sensor signal 2, the receiver 5 then generates an electrical received signal 11, which is evaluated by means of the electronic evaluation device 6 (for example signal processor).

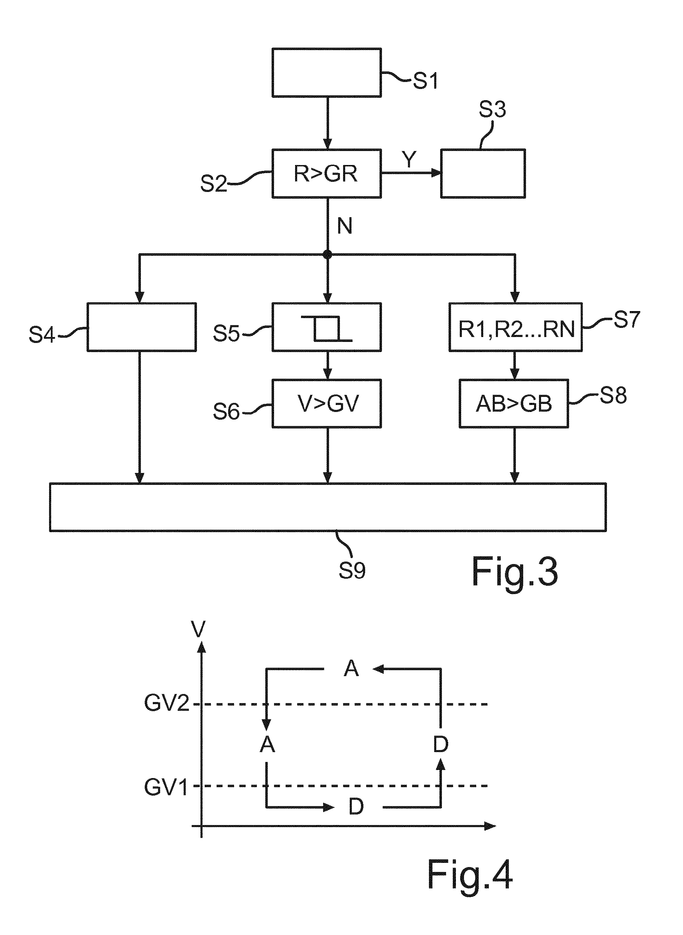

The evaluation device 6 then determines if the reflecting object 10 is atmospheric components or else a real target object based on the received signal 11. Such a method is now explained in more detail with reference to Fig. 3:
The method begins in a first step S1. In the second step S2, the evaluation device 6 checks whether or not a distance R to the reflecting object 10 measured based on the received signal 11 is greater than a preset limit value GR. This is equivalent to the embodiment that the propagation time of the sensor signal 1 is compared to a corresponding limit value GR. The limit value GR can for example be 4 m. If it is determined in step S2 that the distance R is greater than the limit value GR, thus, the method proceeds to a step S3, in which the reflected sensor signal 2 is interpreted as originating from a real target object. In other words, the reflecting object 10 is interpreted as a real item. In contrast, if the check according to step S2 reveals that the distance R is less than the limit value GR, thus, three different methods are possible, which serve for making plausible the decision if the reflecting object 10 is a real obstacle or else an atmospheric component. These three methods can be applied individually or in any combination.

According to a first method, in a step S4, it is checked whether or not at least one further sensor detects a target object in the near range below the limit value GR (for example 4 m). Herein, for example, a distance sensor can be used, and its sensor data can be checked to the effect if the sensor currently measures a distance, which is in a range of values from 0 to GR. If this is the case, thus, this presents a unique indication that the reflecting object 10 is a real target object. Additionally or alternatively, a camera can here also be used as the sensor, which provides images of the environmental region 9. These images can then be examined with regard to target objects.

According to a second method, for plausibility check, the current velocity V of the motor vehicle is taken into account. In a step S5, first, it is checked whether or not this method can be applied at all at the moment. To this, a hysteresis is used, as it is illustrated in Fig. 4. Therein, two velocity limit values GV1 and GV2 are defined. This method or this functionality is only activated ("A" in Fig. 4) if the current velocity V exceeds the higher limit value GV2. This active state is maintained until the velocity V falls below the lower limit value GV1. Then, this functionality is deactivated ("D"). If in step S5 it is determined based on the hysteresis that the velocity V can be taken into account, thus, in a further step S6 it is checked whether or not the current velocity V is greater than a velocity limit value GV. This velocity limit value GV can for example be the second limit value GV2 or else another, in particular higher, value. If this condition according to step S6 is satisfied, this presents a unique indication that the nearby reflecting object 10 is atmospheric components and not a real obstacle. Namely, it is rather unlikely that with a high velocity V a real target object enters the near range beside the motor vehicle.

According to the third method, the measured distance R over the time is monitored. To this, in step S7, a plurality of sensor signals 1 (a plurality of light pulses) is emitted one after the other, and a corresponding plurality of reflected sensor signals 2 is received. To each received sensor signal 2, then, the distance R1, R2, ... RN is measured. In a further step S8, it is then checked whether or not a deviation AB of the measured distance values R1, R2 ... RN is greater than a preset deviation limit value GB. Namely, real target objects exhibit a greater stability of the distance measurement than atmospheric components. If the deviation AB (for example the standard deviation) is greater than the limit value GB, thus, the reflecting object 10 is most likely atmospheric components.

If the above described methods are combined with each other, thus, all of the results are then aggregated and evaluated in a step S9. For example, a weighting can be performed or all of the methods can be equivalently considered.

## Claims

1. Method for operating an optoelectronic sensor device (3) of a motor vehicle by:
- emitting an optical sensor signal (1) into an environmental region (9) of the motor vehicle by means of a transmitter (4) of the sensor device (3),
- receiving a sensor signal (2) reflected in the environmental region (9) and providing an electrical received signal (11) depending on the received sensor signal (2) by means of a receiver (5) of the sensor device (3), and
- determining if the reflected sensor signal (2) originates from a target object or from atmospheric components by means of an evaluation device (6) of the sensor device (3) based on the electrical received signal (11),
**characterized in that**
based on the electrical received signal (11), a propagation time (R) of the sensor signal (1, 2) is determined and the reflected sensor signal (2) is interpreted as originating from a target object if the propagation time (R) is greater than a preset limit value (GR).

2. Method according to claim 1,
**characterized in that**
the limit value (GR) corresponds to a distance value included in a range of values from 2 m to 6 m from the motor vehicle, in particular a distance value included in a range of values from 3 m to 5 m from the motor vehicle.

3. Method according to claim 1 or 2,
**characterized in that**
if the propagation time (R) is less than the preset limit value (GR), it is determined if the reflected sensor signal (2) originates from a target object or from atmospheric components depending on sensor data of at least one sensor different from the sensor device (3).

4. Method according to claim 3,
**characterized in that**
if the propagation time (R) is less than the preset limit value (GR), the reflected sensor signal (2) is interpreted as originating from a target object if the target object is detected by means of the at least one sensor, in particular if a distance greater than zero is measured.

5. Method according to anyone of the preceding claims,
**characterized in that**
if the propagation time (R) is less than the preset limit value (GR), it is determined if the reflected sensor signal (2) originates from a target object or from atmospheric components depending on the current velocity (V) of the motor vehicle.

6. Method according to claim 5,
**characterized in that**
if the propagation time (R) is less than the preset limit value (GR), the reflected sensor signal (2) is interpreted as originating from atmospheric components if the current velocity (V) is greater than a preset velocity limit value (GV).

7. Method according to anyone of the preceding claims,
**characterized in that**
- a plurality of optical sensor signals (1) is emitted one after the other into the environmental region (9) by means of the sensor device (3) and the respective propagation time (R1, R2...R3) is determined to a plurality of received reflected sensor signals (2), and
- if the propagation times (R1, R2...R3) are less than the preset limit value (GR), the reflected sensor signals (2) are interpreted as originating from a target object if a deviation (AB) of the propagation times (R1, R2... R3) from each other is less than a preset deviation limit value (GB).

8. Optoelectronic sensor device (3) for a motor vehicle, including:
- a transmitter (4) for emitting an optical sensor signal (1) into an environmental region (9) of the motor vehicle,
- a receiver (5) for receiving a sensor signal (2) reflected in the environmental region (9) and providing an electrical received signal (11) depending on the received sensor signal (2), and
- an evaluation device (6) for determining if the reflected sensor signal (2) originates from a target object or from atmospheric components based on the electrical received signal (11),
**characterized in that**
the evaluation device (6) is adapted to determine a propagation time (R) of the sensor signal (1) based on the electrical received signal (11) and to interpret the reflected sensor signal (2) as originating from a target object if the propagation time (R) is greater than a preset limit value (GR).

9. Motor vehicle with an optoelectronic sensor device (3) according to claim 8.
